Europäisches Patentamt

**European Patent Office**

**Office européen des brevets**

(11) Veröffentlichungsnummer: **0 014 473**

**A1**

(12) **EUROPÄISCHE PATENTANMELDUNG**

(21) Anmeldenummer: 80100656.0

(22) Anmeldetag: 08.02.80

(51) Int. Cl.³: **B 60 R 1/06**

(30) Priorität: 08.02.79 DE 2904825

(43) Veröffentlichungstag der Anmeldung:
20.08.80 Patentblatt 80/17

(84) Benannte Vertragsstaaten:
AT BE CH FR GB IT LU NL SE

(71) Anmelder: Schuwerk, Fritz
Jutastrasse 26
D-8000 München 2(DE)

(72) Erfinder: Schuwerk, Fritz
Jutastrasse 26
D-8000 München 2(DE)

(74) Vertreter: Abitz, Walter, Dr.-Ing. et al,
Abitz, Morf, Gritschneder P.O. Box 86 01 09
D-8000 München 86(DE)

(54) **Rotierfähiger Kraftfahrzeugspiegel.**

(57) Der Rotor (16) eines rotierfähigen Kraftfahrzeugspiegels ist auf einer Achse gelagert und trägt einen Spiegel. Die Einlass- und Auslassenden einer Anzahl achsnaher. Ansaugbohrungen (19) liegen auf den axial entgegengesetzten Seiten des Rotors, führen durch den Rotor und setzen der Luftströmung einen relativ grossen Widerstand entgegen, so dass am Auslassende der Ansaugbohrungen ein Unterdruck entsteht. Ein durch den Fahrtwind angetriebenes Gebläse saugt Luft aus der Anzahl Ansaugbohrungen an und fördert sie zur Spiegelrückseite. Zwischen der Achse (6) und dem Rotor (16) ist ein solches Lagerspiel vorhanden, dass zwischen der Achse (6) und dem Rotor (16) infolge des Unterdrucks auf der Auslassseite der Ansaugbohrungen (19) Luft angesaugt wird und ein Luftpolster zwischen der Achse und der Lagerbohrung des Rotors gebildet wird.

EP 0 014 473 A1

./...

FIG.3

## Rotierfähiger Kraftfahrzeugspiegel

Die Erfindung betrifft einen rotierfähigen Kraftfahrzeugspiegel nach dem Oberbegriff des Anspruches 1, wie er aus der DE-OS 24 15 407 bekannt ist.

Der aus der DE-OS 24 15 407 bekannte rotierfähige Kraftfahrzeugspiegel besitzt Ansaugkanäle in Form von Luftführungsnuten im Grenzbereich zwischen der Achse und der Innenseite der Lagerbohrung des Rotors. Durch die dabei erzielte Luftlagerung und die Luftströmung, die durch das Gebläse durch die Luftführungsnut angesaugt wird, wird die durch Reibung erzeugte Lagerwärme zwar abgeführt und zur Erwärmung des Spiegels verfügbar gemacht, bei hohen Fahrzeuggeschwindigkeiten bzw. hohen Drehzahlen des Rotors kann es jedoch zu einer Überhitzung des Lagers kommen. Diese Gefahr lässt sich durch die Verwendung geeigneter Lagerwerkstoffe zwar weitgehend beseitigen, es muss dabei jedoch ein erhöhter Herstellungsaufwand in Kauf genommen werden, insbesondere wegen des Einbaus von Lagerbüchsen.

Die Aufgabe der Erfindung besteht in einem rotierfähigen Kraftfahrzeugspiegel, der bei einfacher Konstruktion des Rotorlagers eine weitgehende Nutzbarmachung der Lagerwärme zur Spiegelerwärmung ermöglicht und im Betrieb geräuscharm ist.

Diese Aufgabe wird durch die kennzeichnenden Merkmale des Anspruches 1 gelöst.

Bevorzugte Ausgestaltungen der Erfindung sind Gegenstand der Unteransprüche.

2

Die durch die Erfindung erzielbaren Vorteile bestehen insbesondere darin, dass durch den relativ hohen Luftwiderstand der Ansaugkanäle an deren Auslassende ein Unterdruck entsteht, der durch das Lagerspiel weitere Luft ansaugt, so dass sich im Lagerspiel ein Luftpolster bildet, das zu einem reibungs- und geräuscharmen Lauf des Rotors führt. Infolge dieses Luftpolsters kann auf teuere Lagerwerkstoffe verzichtet werden und genügt ein Kunststofflager. Durch die im Lagerspiel vorhandene Luftströmung wird gleichzeitig ein wesentlicher Anteil der erzeugten Lagerwärme am Ort der Entstehung abgeführt. Durch mehrere in geringem Abstand von der Lagerbohrung vorgesehene Ansaugbohrungen wird zusätzlich eine gleichmässige Abführung der Lagerwärme erreicht. Die Geräuschentwicklung wird ferner durch die angegebene Schrägstellung der Schaufeln verhindert.

Ausführungsbeispiele der Erfindung werden nachfolgend anhand der Zeichnung erläutert. Es zeigen

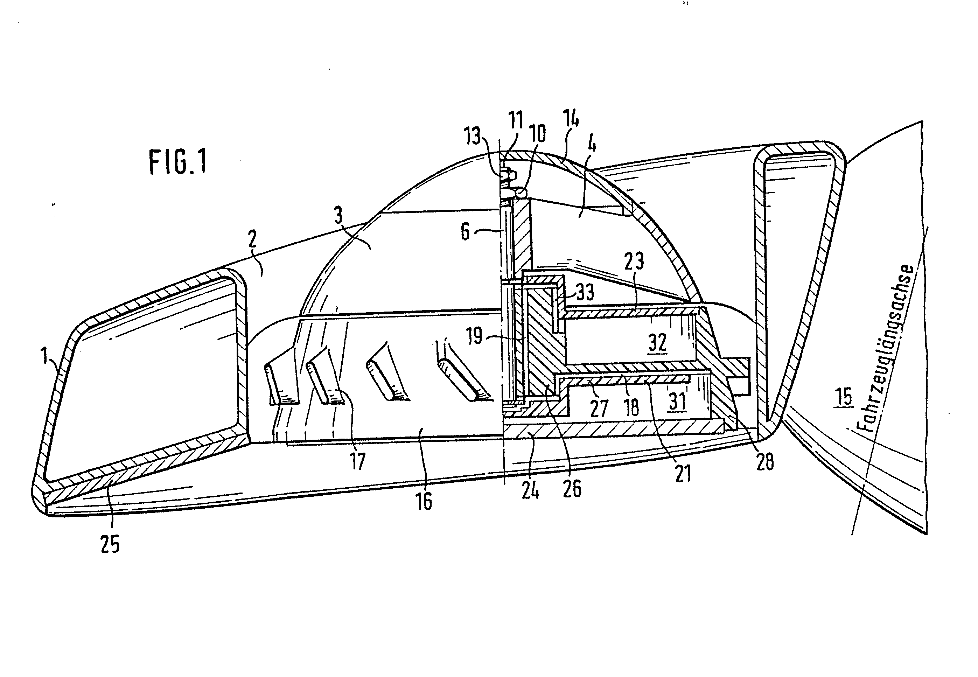

Fig. 1 in einem waagerechten Schnitt und im Massstab 1:1 eine Ausführungsform des Kraftfahrzeugspiegels;

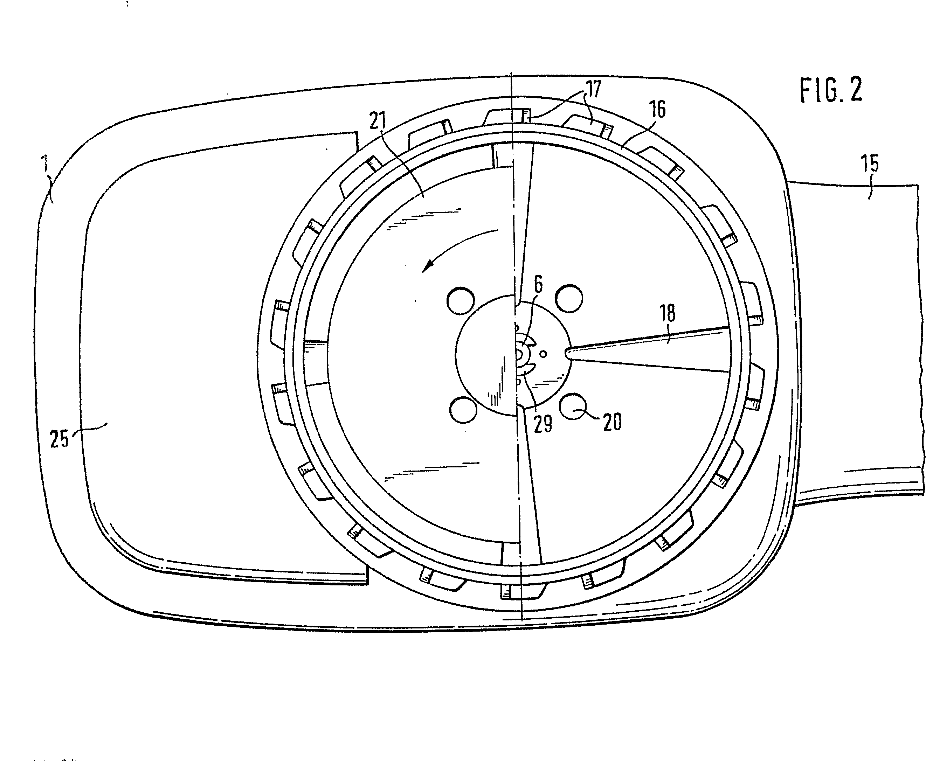

Fig. 2 in einer Ansicht in Fahrtrichtung und teilweise im Schnitt senkrecht zur Fahrtrichtung im Massstab 1:1 den Kraftfahrzeugspiegel nach Fig. 1;

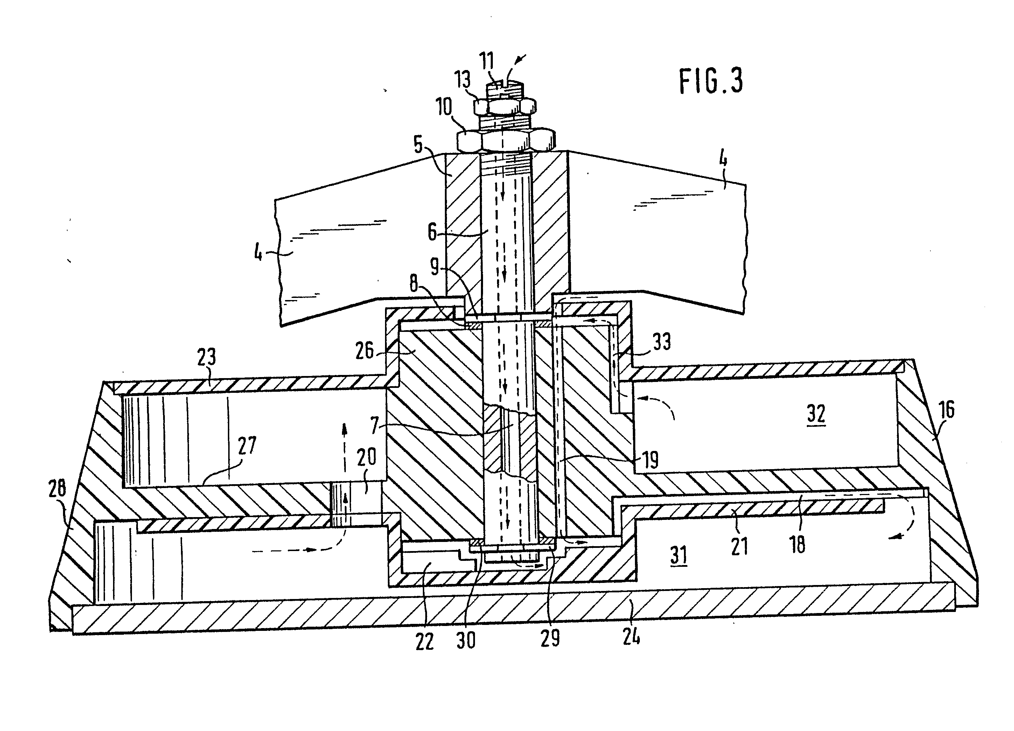

Fig. 3 im Schnitt in Längsrichtung im Massstab 2:1 den Rotor und die Achse des Kraftfahrzeugspiegels nach Fig. 1, wobei die Schnitthälften jeweils um 45° versetzt gezeichnet sind;

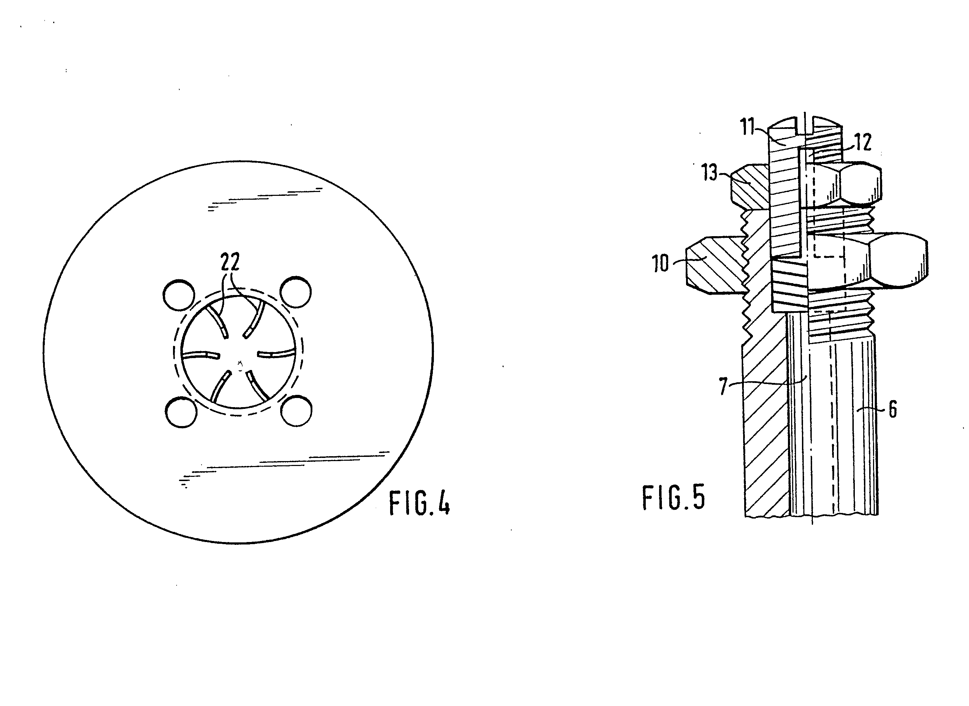

Fig. 4 eine Ansicht der Rotorabdeckung von Innen im Massstab 1:1;

Fig. 5 Details der Luftzutrittreguliereinrichtung im Massstab 5:1 und

Fig. 6a, 6b und 6c Details der Luftschaufeln des Rotors.

3

Der in der Zeichnung dargestellte Kraftfahrzeugspiegel ist durch ein Fussteil 15 an dem Kraftfahrzeug befestigt. Das Fussteil 15 hält ein Gehäuse 1, an dem durch Rippen 2 ein Windleitkegel 3 befestigt ist. In dem Windleitkegel 3 befindet sich ein Rotor 16, der den Spiegel 24 hält. Der Rotor 16 dreht sich auf einer Achse 6, die in einer Achsaufnahme 5 ruht, die durch Rippen 4 im Inneren des Gehäuses 1 gehalten wird. Die Achse 6 ist an dem in Fahrtrichtung vorderen Ende durch eine Mutter 10 und an dem in Fahrtrichtung hinteren Ende durch eine Beilagscheibe 8 und einen Nutring 9 in der Achsaufnahme gesichert. Der Rotor 16 kann durch eine Mutter oder, wie in der Zeichnung dargestellt, durch einen weiteren Nutring 29 und eine Beilagscheibe 30 auf der Achse gesichert werden. Die Achse 6 kann aus jedem geeigneten Werkstoff bestehen, zum Beispiel gezogenem, geschliffenem oder poliertem Werkzeugstahl. Der Rotor besteht aus einer Nabe 26, die eine Rotorscheibe 27 trägt, an der wiederum ein Rotorring 28 mit Luftschaufeln 17 befestigt ist. Die Rotornabe 26 besitzt eine relativ grosse Länge und steht gegebenenfalls in Fahrtrichtung nach vorne über den Rotorring 28 über. Der Rotor ist ausgewuchtet und ausserdem so ausbalanciert, dass sich sein Schwerpunkt möglichst im mittleren Bereich der Rotornabe 26 befindet. Dadurch wird verhindert, dass der Rotor bei bestimmten Umdrehungszahlen in Resonanzschwingung gerät und dadurch der Spiegel kein klares Bild liefert. Zweckmässigerweise besteht der Rotor aus einem Kunststoff mit hoher mechanischer Festigkeit, Steifigkeit und Wärmeformbeständigkeit, z.B. aus einem Polyamid 6, wie Ultramid B4.

Das Lagerspiel zwischen Rotor 16 und Achse 6 entspricht der Norm und beträgt bei dem in der Zeichnung dargestellten Achsdurchmesser von 6 mm 0,01 mm. Eine Lagerbüchse des Rotors ist im allgemeinen nicht erforderlich. Als Schmiermittel dient ausschliesslich das im Lagerspiel vorhandene Luftpolster. Zur Abführung der Lagerwärme enthält die Rotornabe 26 mehrere feine Ansaugbohrungen 19 von etwa 1 mm Durchmesser. In der Zeichnung sind vier derartige Ansaugbohrungen 19 dargestellt. Die Ansaugbohrungen 19 und das Lagerspiel stehen mit Schleuderkanälen 18 in Verbindung, die von der Lagerbohrung nach aussen führen. Diese Schleuderkanäle 18 haben die Funktion eines Schleudergebläses. In ihnen wird Luft durch Fliehkraft nach aussen gedrückt. Die Schleuderkanäle 18 saugen durch die Ansaugbohrungen 19 Luft an. Der Durchmesser, die Länge und die Anzahl der Ansaugbohrungen 19 sind dabei im Vergleich zu der Anzahl und dem Querschnitt der Schleuderkanäle so bemessen, dass in ihnen ein relativ grosser Druckabfall vorhanden ist, das heisst dass an ihren Auslassenden, die mit den inneren Enden der Schleuderkanäle 18 in Verbindung stehen, ein Unterdruck entsteht. Durch diesen Unterdruck wird zusätzliche Luft durch das Lagerspiel angesaugt, die zwischen Achse 6 und Rotor 16 ein Luftpolster erzeugt. Dieses Luftpolster gewährleistet einen reibungsarmen und geräuschlosen Lauf des Rotors. Die Luftströmung durch das Lagerspiel führt gleichzeitig den grössten Teil der Lagerwärme ab. Bei dem oben erwähnten Lagerspiel von 0,01 mm und den oben erwähnten vier Ansaugbohrungen 19 von je 1 mm Durchmesser bei einer Länge der Rotornabe 26 von etwa 2,5 cm haben sich Schleuderkanäle 18 bewährt, deren Querschnitt sich von 1 mm x 2,5 mm am inneren Ende auf 1 mm x 10 mm am äusseren Ende erweitert. Am inneren Ende münden die Schleuderkanäle dabei in einen geschlossenen Raum, in den auch die Ansaugbohrungen 19 münden und der mit dem Lagerspiel in Verbindung steht. Es genügt dabei das übliche Radial- und Axialspiel und der offene Bereich des Nutrings 29, um Luft vom Lagerspiel in den geschlossenen Raum eintreten zu lassen.

Bei der in der Zeichnung dargestellten Ausführungsform werden die Schleuderkanäle 18 durch gerade Rinnen gebildet, die in dem Rotor ausgebildet sind und auf der dem Spiegel zugewandten Seite durch eine kreisförmige Abdeckung 21 verschlossen sind. Die Schleuderkanäle können auch eine gekrümmte Form haben. Die Abdeckung 21 umschliesst mit ihrem vertieften Mittelteil gleichzeitig die Rotornabe 26 und bildet dadurch den vorausgehend genannten Raum. An den äusseren Enden der Schleuderkanäle 18 tritt die Luft aus diesen aus und gelangt in eine zwischen der Abdeckung 21 und der Rückseite des Spiegels 24 gebildeten ersten Kammer 31, die auf ihrem Aussenumfang durch den Rotorring 28 begrenzt wird. Die Abdeckung 21 kann auch nur aus einem topfartigen Mittelteil bestehen, von dem sich strahlenförmige Abdeckungsstreifen weg erstrecken, die nicht den gesamten Rotor abdecken, sondern nur die Schleuderkanäle 18.

Die Luft wird durch die im Lagerspiel und den Ansaugbohrungen 19 aufgenommene Wärme erwärmt und überträgt diese Wärme auf die Rückseite des Spiegels 24, wodurch ein auf dem Spiegel infolge hoher Luftfeuchtigkeit und geringer Temperatur gebildeter Beschlag beseitigt wird. Von der ersten Kammer gelangt die Luft durch Luftdurchführungen 20 in eine zweite Kammer 32, die sich auf der anderen, dem Spiegel entgegengesetzten Seite der Rotorscheibe 27 befindet und von der die Luft wieder durch die Ansaugbohrungen 19 und zum Teil durch das Lagerspiel angesaugt wird. Die Luftdurchführungen 20 befinden sich nahe der Rotornabe 26, damit die Luft durch die gesamte erste Kammer 31 strömt und der Spiegel 24 gleichmässig erwärmt wird. Die zweite Kammer 32 wird bei der in der Zeichnung dargestellten Ausführungsform durch die Rotorscheibe 27, eine zur Rotorscheibe parallele Wand 23 und am inneren und äusseren Umfang durch die Rotornabe 26 bzw. einen Teil des Rotorrings 28 begrenzt. Die Wand 23 besitzt eine mittige Aussparung für die Achse 6 bzw. die Achsaufnahme 5, wobei eine schmale Ringöffnung freibleibt und einen Luftaustausch ermöglicht.

Da bei der in der Zeichnung dargestellten Ausführungsform die Rotornabe 26 über den Rotorring 28 übersteht, sind an dem in Fahrtrichtung zeigenden Ende der Rotornabe Luftführungskanäle 33 ausgebildet, die eine Verbindung zwischen der zweiten Kammer 32 und dem vorderen Ende der Ansaugbohrungen 19 und dem Lagerspiel herstellen.

Zur besseren Lagerkühlung ist vorzugsweise die Achse 6 mit einer Bohrung 7 versehen, die an ihrem spiegelseitigen Ende in die Schleuderkanäle 18 bzw. den von der Abdeckung 21 umschlossenen Raum mündet. An dem in Fahrtrichtung zeigenden Ende ist die Achse dazu mit einer Luftzutritts-reguliereinrichtung versehen, die aus einer Regulierschraube 11 mit einem Schlitz 12 und aus einer Kontermutter 13 für die Regulierschraube 11 besteht. Durch Herausdrehen bzw. Eindrehen der Regulierschraube 11 kann der Luftzutritt vergrössert oder verkleinert werden und damit die Temperatur gesteuert werden, auf die sich das Rotorlager erwärmt. Um die Leistung des Gebläses entsprechend dem durch die Bohrung 7 zusätzlich zugeführten Luftdurchsatz zu erhöhen, ist die Abdeckung in dem am spiegelseitigen Ende der Rotornabe 26 gebildeten Raum innen mit Schaufeln 22 versehen, die ebenso wie die Schleuderkanäle 18 als Schleudergebläse wirken und die Schleuderkanäle 18 unterstützen. Die Luftschaufeln 22 sind vorzugsweise gekrümmt, wie es bei Schleudergebläsen üblich ist, wodurch die Luft zusätzlich zur Fliehkraft durch ihre Trägheit nach aussen gedrückt wird.

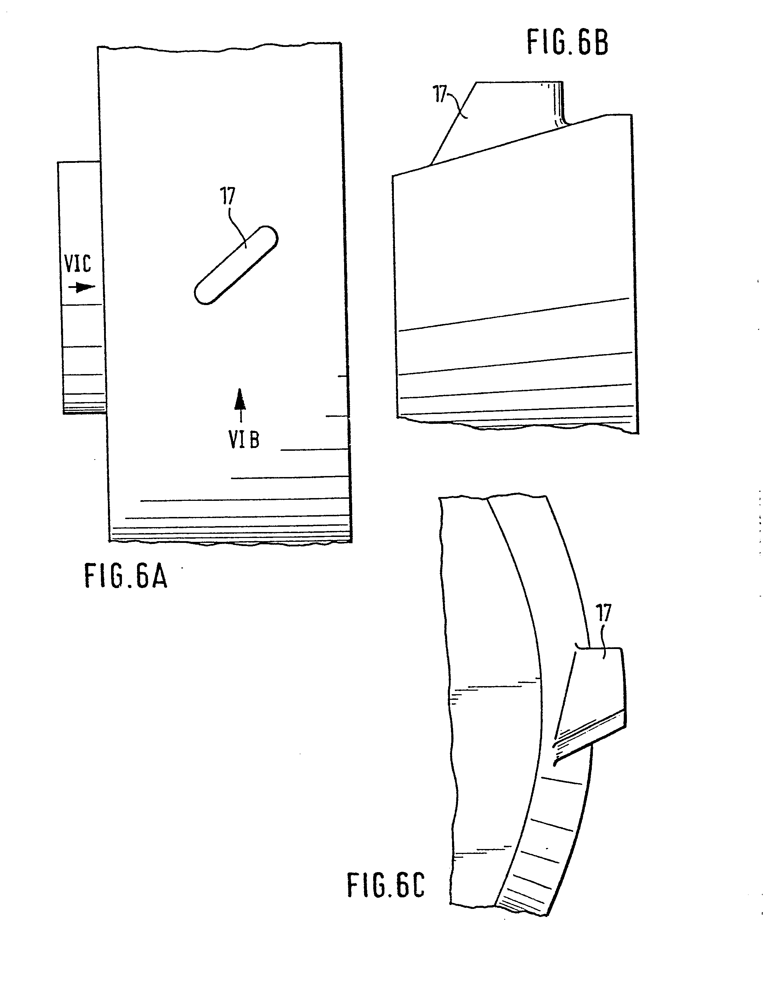

Der Antrieb des Rotors 16 und damit des Schleudergebläses erfolgt durch aussen am Rotorring 28 angebrachte Schaufeln 17, die schräggestellt sind. Um einen geräuschlosen Lauf sicherzustellen und die Gefahr eines Überdrehens des Rotors zu verhindern, muss die Form und die Anordnung der Schaufeln mit der Leistung des Schleudergebläses, das heisst dem Querschnitt und der Länge der Schleuderkanäle 18 und der Ansaugbohrungen 19 sowie dem Lagerspiel und gegebenenfalls der Bohrung 7 abgestimmt sein. Bei der in der Zeichnung dargestellten bevorzugten Ausgestaltung der Erfindung haben sich 18 im gleichen Abstand aussen auf dem Rotorring 28 verteilte Schaufeln 17 als beste Lösung erwiesen. Wie in Fig. 6a dargestellt, stehen die Schaufeln 17 in einem Winkel von 40° zur Fahrtrichtung. Die Vorderkante der Schaufeln ist in einem Winkel von 30° nach hinten, das heisst entgegen der Fahrtrichtung geneigt, wobei sich der Rotorring 28 nach vorne unter einem Winkel von 14° verjüngt. Die Schaufeln 22 sind in einem Abstand von 8 mm von der Hinterkante des Rotorrings 28 angeordnet. Der grösste Durchmesser des Rotorrings beträgt 104,5 mm und die äusseren Enden der Schaufeln 17 beschreiben einen Kreis mit 112 mm Durchmesser. Die Dicke der Schaufeln beträgt 2,4 mm. Sie sind an ihren Kanten abgerundet. Das Gehäuse 1 umgibt den Windleitkegel 3 und den Rotor 16 in einer zylindrischen Mantelfläche mit einem Innendurchmesser von etwa 116 mm, so dass die Schaufeln 17 vom Gehäuse einen Abstand von etwa 2 mm einhalten.

Die in der Zeichnung dargestellte und vorausgehend beschriebene Ausgestaltung der Erfindung ermöglicht nicht

8

nur einen auch bei hohen Fahrgeschwindigkeiten praktisch geräuschlosen Lauf des Rotors, sondern verhindert auch ein Überdrehen des Rotors. Aufgrund der obengenannten Abmessungen des Schleudergebläses und der Ansaugbohrungen 19 sowie dem Lagerspiel und gegebenenfalls der Bohrung 7 verbraucht das Gebläse eine so hohe Leistung, dass die maximale Umdrehungszahl des Rotors auf etwa 5200 $min^{-1}$ beschränkt ist. Gleichzeitig wird dadurch erreicht, dass der Rotor bereits bei relativ kleinen Fahrgeschwindigkeiten von etwa 12 bis 15 km/h in Drehung versetzt wird.

Vorzugsweise ist an dem vom Fahrzeug entfernten Ende des Gehäuses 1 ein fester Spiegel 25 montiert, der einen toten Blickwinkel verhindert.

<u>P a t e n t a n s p r ü c h e</u>

1. Rotierfähiger Kraftfahrzeugspiegel mit einem auf
einer Achse gelagerten Rotor, der einen Spiegel trägt,
mit einer Anzahl achsnaher Ansaugkanäle, deren Einlass-
und Auslassenden auf den axial entgegengesetzten Seiten
des Rotors liegen, und mit einem durch den Fahrtwind
angetriebenen Gebläse, das Luft aus der Anzahl Ansaugkanäle ansaugt und zur Spiegelrückseite fördert,
dadurch gekennzeichnet,

dass die Ansaugkanäle Ansaugbohrungen (19) sind, die
durch den Rotor (16) führen und der Luftströmung einen
relativ grossen Widerstand entgegensetzen, so dass am
Auslassende der Ansaugbohrungen (19) ein Unterdruck
entsteht, und

dass zwischen der Achse (6) und dem Rotor (16) ein
solches Lagerspiel vorhanden ist, dass zwischen der
Achse (6) und dem Rotor (16) infolge des Unterdrucks
auf der Auslassseite der Ansaugbohrungen (19)
Luft angesaugt wird und ein Luftpolster zwischen
der Achse (6) und der Lagerbohrung des Rotors (16)
gebildet wird.

2. Rotierfähiger Kraftfahrzeugspiegel nach Anspruch 1,
dadurch gekennzeichnet, dass das Gebläse durch Schleuderkanäle (18) gebildet wird, die von der Lagerbohrung
des Rotors (16) und den Auslassenden der Ansaugbohrungen
(19) nach aussen führen.

2

3. Rotierfähiger Kraftfahrzeugspiegel nach Anspruch 2, dadurch gekennzeichnet, dass die Schleuderkanäle (18) an die Spiegelrückseite angrenzen.

4. Rotierfähiger Kraftfahrzeugspiegel nach Anspruch 2, dadurch gekennzeichnet, dass die Schleuderkanäle (18) die Luft in eine zwischen dem Rotor (16) und der Spiegelrückseite gebildete erste Kammer (31) fördern und dann die Luft durch Luftdurchführungen (20) im Rotor (16) in eine zweite Kammer (32) gelangt, die sich auf der dem Spiegel abgewandten Seite des Rotors (16) befindet und mit dem Einlassende der Ansaugbohrungen (19) in Verbindung steht.

5. Rotierfähiger Kraftfahrzeugspiegel nach einem der Ansprüche 2 bis 4, dadurch gekennzeichnet, dass sich die Schleuderkanäle 18 nach aussen erweitern.

6. Rotierfähiger Kraftfahrzeugspiegel nach einem der Ansprüche 1 bis 5, bei dem der Antrieb des Gebläses durch auf dem Rotorumfang verteilte, schräggestellte Schaufeln erfolgt, dadurch gekennzeichnet, dass 18 Schaufeln (17) auf dem Rotorumfang angeordnet sind, dass sich der Aussenumfang des Rotors unter einem Winkel von 14° in Fahrtrichtung verjüngt, der grösste Durchmesser des Rotors etwa 104,5 mm beträgt, die Aussenenden der Schaufeln (17) einen Kreis mit einem Durchmesser von etwa 112 mm beschreiben, die Schaufeln (17) unter einem Winkel von 40° zur Rotorachse schräggestellt sind, die Vorderkante der Schaufeln (17) unter einem Winkel von 30° nach hinten geneigt ist, die Schaufeln (17) an ihren äusseren

0014473

Enden eine Längenabmessung von etwa 12 mm besitzen und in einem Abstand von etwa 8 mm von der hinteren Kante des Rotors entfernt angeordnet sind und dass das Gehäuse (1) den Rotor mittels einer zylindrischen Mantelfläche umgibt, die von den Schaufelspitzen einen Abstand von etwa 2 mm hält.

7. Rotierfähiger Kraftfahrzeugspiegel nach einem der Ansprüche 1 bis 6, dadurch gekennzeichnet, dass dem Gebläse zusätzlich Luft durch eine Bohrung (7) in der Rotorachse (6) zugeführt wird und an dem vorderen Ende der Achse (6) eine Luftzutrittreguliereinrichtung vorgesehen ist.

- - - - - - . - -

FIG.1

13 11 10 14 4

3

2

6

23

33

19

32

1

17

16

27 18 31

24 26

21

28

25

15 Fahrzeuglängsachse

1/5

0014473

FIG. 2

2/5

FIG.3

FIG.5

FIG.4

0014473

FIG.6B

17

VIC

17

VIB

FIG.6A

17

FIG.6C

0014473

| Kategorie | EINSCHLÄGIGE DOKUMENTE | | KLASSIFIKATION DER ANMELDUNG (Int.Cl ³) |
|---|---|---|---|
| | Kennzeichnung des Dokuments mit Angabe, soweit erforderlich, der maßgeblichen Teile | betrifft Anspruch | B 60 R 1/06 |
| | DE - A - 1 780 533 (NEUBERGER)<br>* Insgesamt * | 1,6 | |
| | -- | | |
| D | DE - A - 2 415 407 (SCHUWERK)<br>* Insgesamt *<br>& FR - A - 2 265 582 (SCHUWERK) | 1 | |
| | -- | | |
| A | FR - A - 2 148 711 (BEUCHER)<br>* Insgesamt * | 1,6 | |
| | ---- | | |

RECHERCHIERTE SACHGEBIETE (Int Cl ³)

B 60 R

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-05-1980 | SCHMITTER |

EPA form 1503.1  06.78